# EUROPEAN PATENT APPLICATION

(11) **EP 4 664 610 A1**
(43) Date of publication of application: **17.12.2025**
(21) Application number: 23921325.9
(22) Date of filing: 30.11.2023
(51) Int. Cl.: H01M 10/653, H01M 10/613, H01M 10/617, H01M 10/625, H01M 10/6554

(54) **BATTERY PACK AND METHOD FOR MANUFACTURING BATTERY PACK**

(30) Priority: 07.02.2023 JP 2023017107
(71) Applicant: AESC Japan Ltd., Yokohama-Shi, Kanagawa 220-0012 (JP)
(72) Inventor: URANO, Yuki, Zama-shi, Kanagawa 252-0012 (JP); TONG, Junjie, Zama-shi, Kanagawa 252-0012 (JP); YOSHIOKA, Shinichi, Zama-shi, Kanagawa 252-0012 (JP)
(74) Representative: Mathys & Squire
(86) International application number: PCT/JP2023/042865
(87) International publication number: WO 2024/166505

(57) **Abstract**

A battery pack (10) includes a battery cell (102), a left cover (112) and a right cover (114) thermally coupled with a predetermined portion of the battery cell (102), and a filler (150) thermally coupled with another predetermined portion of the battery cell (102). The amount of at least a portion of the filler (150) decreases toward the predetermined portion of the battery cell (102).

## Description

### TECHNICAL FIELD

The present invention relates to a battery pack and a method of manufacturing a battery pack.

### BACKGROUND ART

In recent years, various battery packs including a plurality of battery modules have been developed. In the battery module described in Patent Document 1, for example, the battery module is fixed to a housing body. In the battery module, a thermally conductive member is provided between the battery module and the housing body. The thermally conductive member is formed by application.

Patent document 2 describes a method of joining battery cells with an adhesive. In the method, the adhesive is provided in a stripe pattern shape parallel to a longitudinal direction of the battery cell.

### RELATED DOCUMENT

### PATENT DOCUMENT

Patent Document 1: International Patent Publication No. WO2017/47211
Patent Document 2: Japanese Patent Application Publication No. 2006-172994

### DISCLOSURE OF THE INVENTION

### TECHNICAL PROBLEM

A battery cell mounted in a housing body via a filler may also be thermally coupled with a thermally conductive element other than the filler. The filler may be uniformly provided relative to a battery cell. As a result, the heat may be uniformly conducted from the battery cell via the filler, or the heat may be uniformly conducted to the battery cell via the filler. In this case, however, the variation in the temperature distribution of the battery cell may be caused by the conduction of the heat from the battery cell to the thermally conductive element, and the conduction of the heat from the thermally conductive element to the battery cell. The variation in the temperature distribution of the battery cell may affect the characteristic of the battery cell.

An example of the object of the present invention is to reduce the variation in the temperature distribution in the battery cell. Other objects of the present invention will become apparent from the description of the present specification.

### SOLUTION TO PROBLEM

An aspect of the present invention is as follows.
[1] A battery pack including:
   a battery cell;
   a thermally conductive element thermally coupled with a predetermined portion of the battery cell; and
   a filler thermally coupled with another predetermined portion of the battery cell, wherein
   an amount of at least a portion of the filler decreases toward the predetermined portion of the battery cell.
[2] The battery pack according to [1], wherein
   the thermally conductive element is located on at least one of opposite sides of a plurality of the battery cells stacked in a predetermined direction.
[3] A method of manufacturing a battery pack, the method including:
   a step of thermally coupling a predetermined portion of a battery cell and a thermally conductive element; and
   a step of thermally coupling another predetermined portion of the battery cell and a filler, wherein
   an amount of at least a portion of the filler decreases toward the predetermined portion of the battery cell.

### ADVANTAGEOUS EFFECTS OF INVENTION

According to the aspect described above of the present invention, the variation in the temperature distribution in the battery cell can be reduced.

### BRIEF DESCRIPTION OF THE DRAWINGS

[Fig. 1] A perspective view of a battery pack according to an embodiment.
[Fig. 2] A plan view of the battery pack according to the embodiment with an upper case removed.
[Fig. 3] A plan view of a battery module according to the embodiment.
[Fig. 4] An A-A cross-sectional view of Fig. 3.
[Fig. 5] A plan view of a filler according to the embodiment.
[Fig. 6] A view for describing a first example of a method of forming a filler according to the embodiment.
[Fig. 7] A view for describing a second example of a method of forming a filler according to the embodiment.
[Fig. 8] A view for describing a third example of a method of forming a filler according to the embodiment.
[Fig. 9] A view for describing a fourth example of a method of forming a filler according to the embodiment.

### DESCRIPTION OF EMBODIMENTS

Hereinafter, an embodiment of the present invention is described by use of the drawings. In all drawings, a similar component is assigned with a similar reference sign, and description thereof is omitted as appropriate.

Hereinafter, A and B being thermally coupled with each other means that, for example, A and B being in direct contact with each other, or A and B being joined to each other via an element, such as a thermally conductive adhesive, having a thermal conductivity of equal to or greater than 10 W/m•K, such as equal to or greater than 100 W/m•K. A and B being thermally coupled, however, is not limited to this example.

A and B being thermally insulated from each other means that, for example, an element, such as air, having a thermal conductivity of less than 0.50 W/m•K, such as less than 0.10 W/m•K exists between A and B. A and B being thermally insulated, however, is not limited to this example.

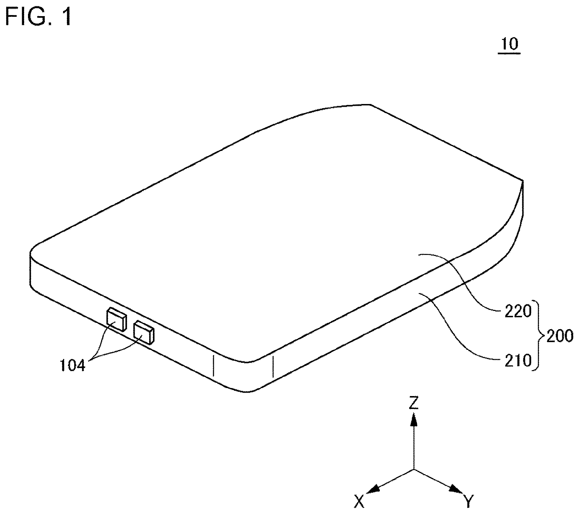

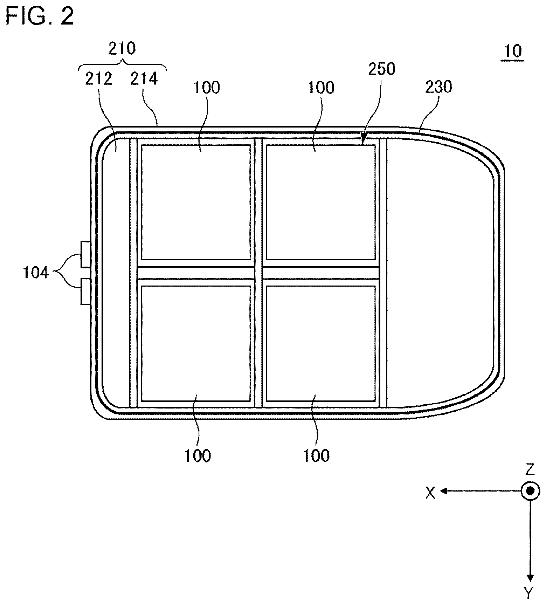

Fig. 1 is a perspective view of a battery pack 10 according to an embodiment. Fig. 2 is a plan view of the battery pack 10 according to the embodiment with an upper case 220 removed.

In the embodiment, the battery pack 10 is mounted on an automobile. Specifically, the battery pack 10 is mounted between the front wheel and the rear wheel of the automobile. Hereinafter, unless otherwise specified, the battery pack 10 is described as being mounted on the automobile. However, the battery pack 10 is also applicable to the purposes other than the automobile.

In each figure, the X direction, the Y direction, and the Z direction are illustrated for description. The X direction indicates the front-rear direction of the battery pack 10. The Y direction is orthogonal to the X direction. The Y direction indicates the left-right direction of the battery pack 10. The Z direction is orthogonal to both the X direction and the Y direction. The Z direction indicates the upward-downward direction of the battery pack 10. The arrow pointing in the X direction, and the arrows pointing in the Y direction and pointing in the Z direction indicate a front direction, a left direction, and an upward direction of the battery pack 10, respectively. In Fig. 2, the white circle with the black dot indicating the Z direction indicates that the arrow pointing to the Z direction extends from the far side toward the near side of the sheet. However, the relationship between the X direction, the Y direction, the Z direction, the front-rear direction, the left-right direction, and the upward-downward direction of the battery pack 10 is not limited to this example.

In the embodiment, the front-rear direction, the left-right direction, and the upward-downward direction of the battery pack 10 are determined by the automobile on which the battery pack 10 is mounted. The X direction, the Y direction, and the Z direction indicate the front-rear direction, the left-right direction, and the upward-downward direction of the automobile, respectively. The arrow pointing in the X direction, the arrow pointing in the Y direction, and the arrow pointing in the Z direction indicate the front direction, the left direction, and the upward direction of the automobile, respectively. However, the relationship between the front-back direction, the left-right direction, and the upward-downward direction of the battery pack 10 and the front-back direction, the left-right direction, and the upward-downward direction of the automobile are not limited to this example.

Hereinafter, the direction perpendicular to the Z direction is referred to as a horizontal direction according to necessity.

The battery pack 10 includes four battery modules 100 and a housing body 200. The four battery modules 100 include a pair of the left battery modules 100 arranged in the X direction and a pair of the right battery modules 100 arranged in the X direction. The housing body 200 includes a lower case 210 and an upper case 220. The lower case 210 may also be generally referred to as a tray or a main body portion, for example. The lower case 210 includes a lower plate 212 and a side frame 214. The upper case 220 may also be generally referred to as a cover or a lid portion, for example. As described later, each of the battery modules 100 includes a plurality of battery cells 102.

A pair of terminals 104 are provided in front of the side frame 214. The pair of terminals 104 is arranged substantially parallel in the Y direction. The front end portion of each of the terminals 104 protrudes forward from the front surface of the side frame 214. In the electric path, the four battery modules 100 are connected in series between a pair of the terminals 104.

The lower case 210 and the upper case 220 are attached to each other via a sealing member 230. The lower case 210, the upper case 220, and the sealing member 230 form a housing space 250. The housing space 250 houses the four battery modules 100.

The lower plate 212 defines a bottom portion of the housing space 250. The side frame 214 defines a side portion of the housing space 250. Specifically, the side frame 214 is provided along the outermost circumference of the lower plate 212 when viewed from the Z direction. The upper case 220 defines a top portion of the housing space 250.

The sealing member 230 is an elastic material such as rubber, for example. The sealing member 230 is provided over the entire circumference of the side frame 214 when viewed from the Z direction. Thus, the sealing member 230 surrounds the housing space 250 when viewed from the Z direction. The housing space 250 can be therefore sealed from a space outside the housing body 200 by the sealing member 230.

The number and arrangement of the battery modules 100 are not limited to the example according to the embodiment. For example, the number of the battery modules 100 may be only two, only three, or five or more.

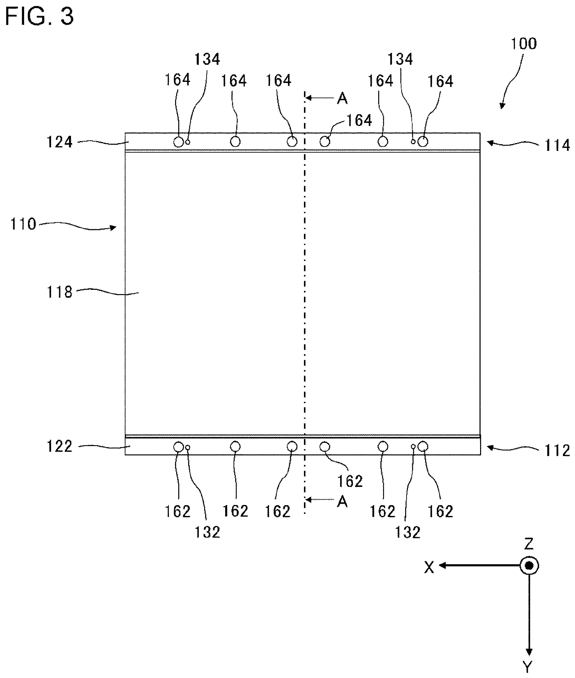

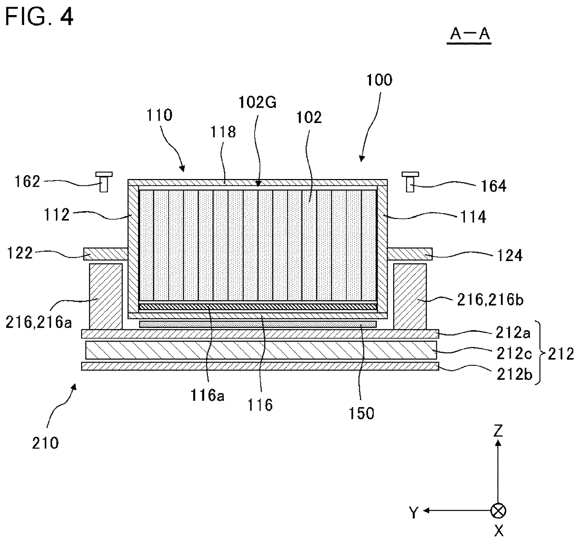

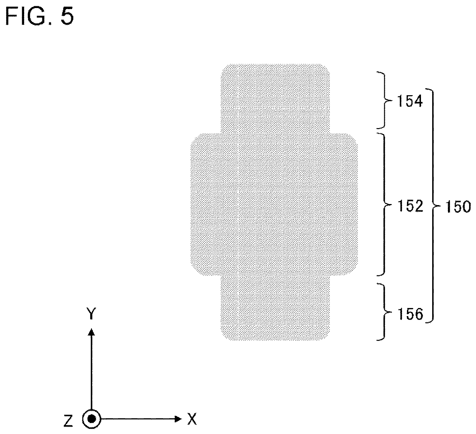

Fig. 3 is a plan view of the battery module 100 according to the embodiment. Fig. 4 is an A-A cross-sectional view of Fig. 3. Fig. 5 is a plan view of a filler 150 according to the embodiment. In Fig. 4, the white circle with the X indicating the X direction indicates that the arrow pointing in the X direction extends from the near side toward the far side of the sheet.

As illustrated in Fig. 4, the battery module 100 includes a cell stack 102G and a housing case 110.

The cell stack 102G includes a plurality of the battery cells 102. In the example illustrated in Fig. 4, a plurality of the battery cells 102 is stacked substantially parallel in the Y direction. A non-illustrated material having a predetermined thermal conductivity is provided between the battery cells 102 adjacent in the Y direction. Examples of the material having the predetermined thermal conductivity include but are not limited to urethane. Alternatively, the battery cells 102 adjacent in the Y direction are in direct contact with each other. As a result, a plurality of the battery cells 102 is thermally coupled with each other. Further, a plurality of the battery cells 102 is electrically connected to each other. In the cell stack 102G, for example, a plurality of battery cell groups including a plurality of the battery cells 102 connected in parallel is connected in series. Alternatively, a plurality of the single battery cells 102 may be connected in series.

The housing case 110 houses the cell stack 102G. The housing case 110 includes a left cover 112, a right cover 114, a lower cover 116, an upper cover 118, a non-illustrated front cover, and a non-illustrated rear cover.

The left cover 112 covers the left side surface of the cell stack 102G. The right side surface of the left cover 112 and the left side surface of the battery cell 102 located at the left end of the cell stack 102G are in contact with each other directly or via the material having the predetermined thermal conductivity described above. The left cover 112 is made of a material having a relatively high thermal conductivity. As a result, the left cover 112 is a thermally conductive element thermally coupled with the cell stack 102G.

The right cover 114 covers the right side surface of the cell stack 102G. The right side surface of the left cover 112 and the left side surface of the battery cell 102 located at the left end of the cell stack 102G are in contact with each other directly or via the material having the predetermined thermal conductivity described above. The left cover 112 is made of a material having a relatively high thermal conductivity. As a result, the left cover 112 is a thermally conductive element thermally coupled with the cell stack 102G.

The lower cover 116 covers the lower surface of the cell stack 102G via a thermally conductive adhesive 116a. As a result, the lower surface of the cell stack 102G and the upper surface of the lower cover 116 are thermally coupled via the thermally conductive adhesive 116a.

The upper cover 118 covers the upper surface of the cell stack 102G via a gap. As a result, the upper surface of the cell stack 102G and the upper cover 118 are thermally insulated.

The non-illustrated front cover covers the front surface of the cell stack 102G via a gap. As a result, the front surface of the cell stack 102G and the rear surface of the front cover are thermally insulated.

The non-illustrated rear cover covers the rear surface of the cell stack 102G via a gap. As a result, the rear surface of the cell stack 102G and the front surface of the rear cover are thermally insulated.

The lower plate 212 includes an upper cooling plate 212a and a lower cooling plate 212b. The upper cooling plate 212a and the lower cooling plate 212b are made of metal, for example. Specifically, the upper cooling plate 212a and the lower cooling plate 212b include aluminum as a main component, for example. The upper cooling plate 212a and the lower cooling plate 212b overlap in the Z direction. A refrigerant 212c flows in a region between the lower surface of the upper cooling plate 212a and the upper surface of the lower cooling plate 212b. The refrigerant 212c is a liquid such as water, for example.

The lower case 210 includes a support frame 216. As viewed from the Z direction, the support frame 216 is a surrounding body surrounding at least one portion of the cell stack 102G. The support frame 216 is provided on the upper surface of the upper cooling plate 212a. The lower surface of the support frame 216 and the upper surface of the upper cooling plate 212a are thermally coupled with each other. Hereinafter, according to necessity, a portion of the support frame 216 located on the left side of the cell stack 102G is referred to as a left support portion 216a. Hereinafter, according to necessity, a portion of the support frame 216 located on the right side of the cell stack 102G is referred to as a right support portion 216b.

A left protrusion 122 is provided on the left outer surface of the left cover 112. The left side surface of the left cover 112 and the right end portion of the left protrusion 122 are thermally coupled with each other. The left protrusion 122 protrudes toward the left side of the left cover 112. The left protrusion 122 is arranged on the upper surface of the left support portion 216a. The left protrusion 122 and the left support portion 216a are fastened to each other by a plurality of left bolts 162. As a result, the lower surface of the left protrusion 122 and the upper surface of the left support portion 216a are in contact with each other and thermally coupled with each other. As illustrated in Fig. 3, a plurality of the left bolts 162 is arranged substantially parallel in the X direction. However, the number and arrangement of the left bolts 162 are not limited to the example illustrated in Fig. 3. For example, the left protrusion 122 and the left support portion 216a may be fastened to each other by only the single left bolt 162.

A right protrusion 124 is provided on the right outer surface of the right cover 114. The right side surface of the light cover 114 and the left end portion of the light protrusion 124 are thermally coupled with each other. The right protrusion 124 protrudes toward the right side of the right cover 114. The right protrusion 124 is arranged on the upper surface of the right support portion 216b. The right protrusion 124 and the right support portion 216b are fastened to each other by a plurality of right bolts 164. As a result, the lower surface of the light protrusion 124 and the upper surface of the light support portion 216b are in contact with each other and thermally coupled with each other. As illustrated in Fig. 3, a plurality of the right bolts 164 is arranged substantially parallel in the X direction. However, the number and arrangement of the right bolts 164 are not limited to the example illustrated in Fig. 3. For example, the right protrusion 124 and the right support portion 216b may be fastened to each other by only the single right bolt 164.

The battery module 100 is mounted on the lower plate 212 via the filler 150. The filler 150 is arranged between the lower surface of the lower cover 116 and the upper surface of the upper cooling plate 212a. The filler 150 is compressed in the Z direction by the lower surface of the lower cover 116 and the upper surface of the upper cooling plate 212a.

In the embodiment, the filler 150 is a thermally conductive adhesive. Examples of the filler 150 include a modified silicone-based applied filler, a urethane-based applied filler, an acrylic-based applied filler, and the like. The lower surface of the lower cover 116 and the upper surface of the upper cooling plate 212a are therefore physically joined via the filler 150. For this reason, the lower cover 116 and the upper cooling plate 212a can be less likely to shift from each other as compared to the case where the filler 150 is not provided. Further, the lower surface of the lower cover 116 and the upper surface of the upper cooling plate 212a are thermally coupled via the filler 150. For this reason, the heat generated in the battery module 100 can be easily conducted to the lower case 210 via the thermally conductive adhesive 116a, the lower cover 116, and the filler 150 as compared to the case where the filler 150 is not provided.

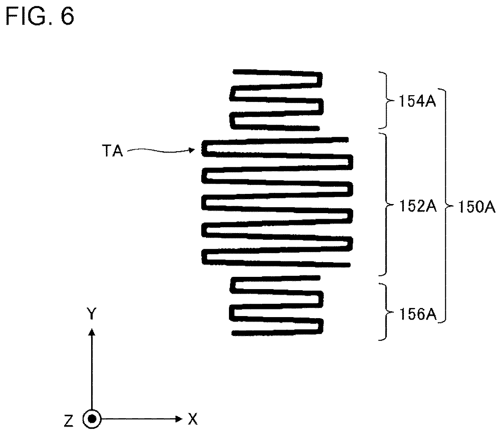

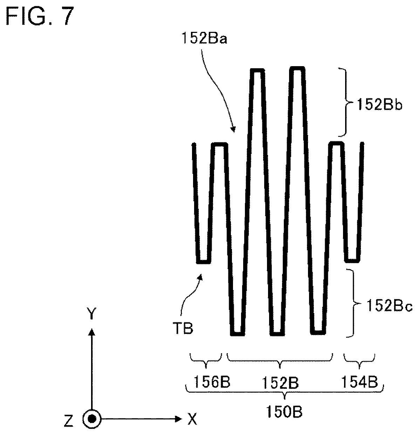

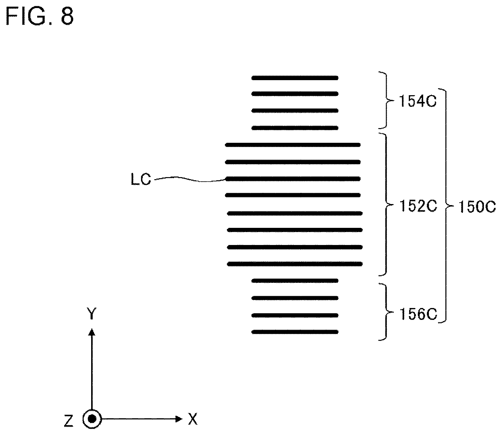

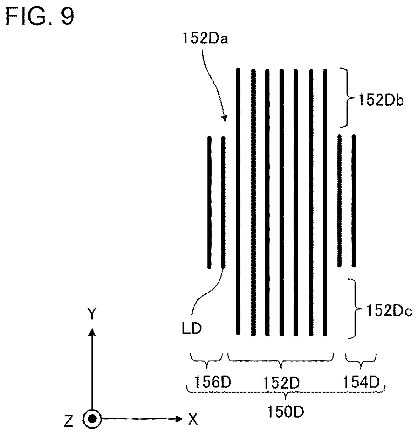

As illustrated in Fig. 5, as viewed from the Z direction, a pattern of the filler 150 is formed by allowing a filler applied in a substantially zigzag pattern illustrated in Figs. 6 and 7 described later or in a substantially stripe pattern illustrated in Figs. 8 and 9 described later to be compressed in the Z direction and to spread in the horizontal direction. The filler 150 is compressed in the Z direction by the lower surface of the lower cover 116 and the upper surface of the upper cooling plate 212a.

As illustrated in Fig. 5, the filler 150 includes a wide region 152, a first narrow region 154, and a second narrow region 156. The width of the wide region 152 in the X direction is wider than the width of each of the first narrow region 154 and the second narrow region 156 in the X direction. In the example illustrated in Fig. 5, the widths of the first narrow region 154 and the second narrow region 156 in the X direction are substantially equal. However, the respective widths of the first narrow region 154 and the second narrow region 156 in the X direction may be different from each other. The wide region 152 is located between the first narrow region 154 and the second narrow region 156 in the Y direction. The first narrow region 154 is located on the left side relative to the wide region 152. The second narrow region 156 is located on the right side relative to the wide region 152.

The width of the left half portion of the filler 150 in the X direction decreases toward the left end portion of the cell stack 102G in the Y direction from the wide region 152 to the first narrow region 154. In other words, the amount of the filler 150 from the wide region 152 to the first narrow region 154 decreases toward the left end portion of the cell stack 102G in the Y direction. The width of the right half portion of the filler 150 in the X direction decreases toward the right end portion of the cell stack 102G in the Y direction from the wide region 152 to the second narrow region 156. In other words, the amount of the filler 150 from the wide region 152 to the second narrow region 156 decreases toward the right end portion of the cell stack 102G in the Y direction. Accordingly, the variation in the temperature distribution of the cell stack 102G can be reduced as compared to the case where the amount of filler 150 is constant regardless of the position in the Y direction within the filler 150. The reason is as follows.

First, consider the case where the heat generated from the cell stack 102G is conducted toward the lower case 210.

The heat generated from the cell stack 102G is easily conducted mainly from the lower surface of the cell stack 102G to the upper surface of the lower case 210 via the thermally conductive adhesive 116a, the lower cover 116, and the filler 150. Further, the left side surface and the right side surface of the cell stack 102G are thermally coupled with the left cover 112 and the right cover 114, respectively. As a result, some of the heat generated from the cell stack 102G may be conducted from the left side surface of the cell stack 102G to the left portion of the lower plate 212 through the left cover 112, the left protrusion 122, and the left support portion 216a and may be conducted from the right side surface of the cell stack 102G to the right portion of the lower plate 212 through the right cover 114, the right protrusion 124, and the right support portion 216b. The front surface and the rear surface of the cell stack 102G, however, are thermally insulated from the front cover and the rear cover respectively, not illustrated. As a result, the heat is conducted to the cell stack 102G more easily in the Y direction than in the X direction, not considering the heat conduction from the cell stack 102G in the Z direction. Accordingly, the temperature at the Y-directional opposite ends of the cell stack 102G more easily becomes lower than the temperature at the Y-directional center of the cell stack 102G if the heat is conducted uniformly from the lower surface of the cell stack 102G.

In the embodiment, the amount of the filler 150 is partially reduced in a region overlapping the Y-directional opposite ends of the cell stack 102G in the Z direction. As a result, the heat conduction from the cell stack 102G via the filler 150 is reduced at the Y-directional opposite ends of the cell stack 102G more than at the Y-directional center of the cell stack 102G. Accordingly, the variation in the temperature distribution of the cell stack 102G can be reduced as compared to the case where the amount of the filler 150 is constant regardless of the position in the Y direction within the filler 150.

Next, consider the case where the heat generated from the lower case 210 is conducted to the cell stack 102G.

The heat generated from the lower plate 212 is easily conducted mainly from the upper surface of the lower plate 212 to the lower surface of the cell stack 102G via the filler 150, the lower cover 116, and the thermally conductive adhesive 116a. Further, some of the heat generated from the lower plate 212 may be conducted from the left portion of the lower plate 212 to the left side surface of the cell stack 102G through the left support portion 216a, the left protrusion 122, and the left cover 112 and may be conducted from the right portion of the lower plate 212 to the right side surface of the cell stack 102G through the right support portion 216b, the right protrusion 124, and the right cover 114. The heat, however, is conducted to the cell stack 102G more easily in the Y direction than in the X direction for the reason similar to that described above, not considering the heat conduction in the Z direction to the cell stack 102G. As a result, the temperature at the Y-directional opposite ends of the cell stack 102G more easily becomes higher than the temperature at the Y-directional center of the cell stack 102G if the heat is conducted uniformly to the lower surface of the cell stack 102G.

In the embodiment, the amount of the filler 150 is partially reduced in a region overlapping the Y-directional opposite ends of the cell stack 102G in the Z direction. As a result, the heat conduction to the cell stack 102G via the filler 150 is reduced at the Y-directional opposite ends of the cell stack 102G more than at the Y-directional center of the cell stack 102G. Accordingly, the variation in the temperature distribution of the cell stack 102G can be reduced as compared to the case where the amount of the filler 150 is constant regardless of the position in the Y direction within the filler 150.

The portion of the filler 150 that should have a reduced amount can be determined by the portion of the cell stack 102G that is thermally coupled with the thermally conductive element. In the embodiment, the left side surface and the right side surface of the cell stack 102G are thermally coupled with the left cover 112 and the right cover 114 that function as the thermally conductive elements, respectively. As a result, the amount of the left portion of the filler 150 and the amount of the right portion of the filler 150 are less than the amount at the central portion of the filler 150 in the Y direction. When the left side surface of the cell stack 102G is thermally coupled with the thermally conductive element and the right side surface of the cell stack 102G is thermally insulated, however, the amount of the left portion of the filler 150 may be less than the amount of the other portion of the filler 150. In this example, the variation in the temperature distribution of the cell stack 102G can be also reduced as compared to the case where the amount of the filler 150 is constant regardless of the position in the Y direction within the filler 150. Alternatively, the left side surface and the right side surface of the cell stack 102G may be thermally insulated, and the front surface and the rear surface of the cell stack 102G may be thermally coupled with the thermally conductive element. In this case, the amount of the front portion of the filler 150 and the amount of the rear portion of the filler 150 may be less than the amount at the central portion of the filler 150 in the X direction. In this case, the variation in the temperature distribution of the cell stack 102G can be also reduced as compared to the case where the amount of the filler 150 is constant regardless of the position in the X direction within the filler 150.

In the embodiment, the amount of each portion of the filler 150 is adjusted by the width of each portion of the filler 150 in the horizontal direction. However, the amount of each portion of the filler 150 may also be adjusted by the thickness of each portion of the filler 150 in the Z direction. In this example, the greater the thickness of the filler 150 in the Z direction is, the greater the amount of the filler 150 is, and the less the thickness of the filler 150 in the Z direction is, the less the amount of the filler 150 is.

In the embodiment, the lower surface of the cell stack 102G and the opposite surfaces of the cell stack 102G in the Y direction are thermally coupled with the lower plate 212 being the same thermally conductive element. However, the lower surface of the cell stack 102G and the opposite surfaces of the cell stack 102G in the Y direction may be thermally coupled with different thermally conductive elements.

Fig. 6 is a view for describing a first example of a method of forming the filler 150 according to the embodiment. In the first example, the filler 150 is formed as follows.

First, an applied filler 150A is applied onto the upper surface of the upper cooling plate 212a from a non-illustrated nozzle. The applied filler 150A includes a first pattern portion 152A, a second pattern portion 154A, and a third pattern portion 156A. The first pattern portion 152A is located between the second pattern portion 154A and the third pattern portion 156A in the Y direction. The second pattern portion 154A is located on the right side relative to the first pattern portion 152A. The third pattern portion 156A is located on the left side relative to the first pattern portion 152A.

Each of the first pattern portion 152A, the second pattern portion 154A, and the third pattern portion 156A has a substantially zigzag shape. Each of the first pattern portion 152A, the second pattern portion 154A, and the third pattern portion 156A includes a plurality of folded portions TA arranged alternately on the X-directional opposite sides relative to the X-directional center of the cell stack 102G.

The width of the first pattern portion 152A in the X direction is greater than the width of each of the second pattern portion 154A and the third pattern portion 156A in the X direction. The width of each pattern of the applied filler 150A in the X direction is a distance in the X direction between the folded portions TA on the X-directional opposite sides of each pattern.

Next, the battery module 100 is mounted on the upper surface of the upper cooling plate 212a via the applied filler 150A. Next, the left protrusion 122 and the left support portion 216a are fastened to each other by the left bolt 162. Similarly, the right protrusion 124 and the right support portion 216b are fastened to each other by the right bolt 164. Thus, the applied filler 150A is compressed in the Z direction by the lower surface of the lower cover 116 and the upper surface of the upper cooling plate 212a. For this reason, the applied filler 150A spreads in the horizontal direction. As a result, the filler 150 is formed as the gap between the folded portions TA of each pattern of the applied filler 150A is filled with the filler. The wide region 152 corresponds to the first pattern portion 152A. The first narrow region 154 corresponds to the second pattern portion 154A. The second narrow region 156 corresponds to the second narrow region 156.

Fig. 7 is a view for describing a second example of a method of forming the filler 150 according to the embodiment. The second example described using Fig. 7 is the same as the first example described using Fig. 6, except for the following point.

An applied filler 150B illustrated in Fig. 7 includes a first pattern portion 152B, a second pattern portion 154B, and a third pattern portion 156B. The first pattern portion 152B is located between the second pattern portion 154B and the third pattern portion 156B in the X direction. The second pattern portion 154B is in front of the first pattern portion 152B. The third pattern portion 156B is behind the first pattern portion 152B.

Each of the first pattern portion 152B, the second pattern portion 154B, and the third pattern portion 156B has a substantially zigzag shape. Each of the first pattern portion 152B, the second pattern portion 154B, and the third pattern portion 156B includes folded portions TB arranged alternately on the Y-directional opposite sides relative to the Y-directional center of the cell stack 102G.

The width of the first pattern portion 152B in the Y direction is greater than the width of each of the second pattern portion 154B and the third pattern portion 156B in the Y direction. The width of each pattern of the applied filler 150B in the Y direction is a distance in the Y direction between the folded portions TB on the Y-directional opposite sides of each pattern. As a result, the first pattern portion 152B includes a central region 152Ba, a left region 152Bb, and a right region 152Bc. The central region 152Ba is in a region overlapping the second pattern portion 154B and the third pattern portion 156B in the X direction. The left region 152Bb is located on the left side relative to the central region 152Ba. The right region 152Bc is located on the right side relative to the central region 152Ba.

As in the first example described using Fig. 6, the filler 150 is formed by compressing the applied filler 150B in the Z direction. The wide region 152 corresponds to the central region 152Ba, the second pattern portion 154B, and the third pattern portion 156B. The first narrow region 154 corresponds to the left region 152Bb. The second narrow region 156 corresponds to the right region 152Bc.

Fig. 8 is a view for describing a third example of a method of forming the filler 150 according to the embodiment. The third example described using Fig. 8 is the same as the first example described using Fig. 6, except for the following point.

The applied filler 150C illustrated in Fig. 8 includes a first pattern portion 152C, a second pattern portion 154C, and a third pattern portion 156C. The first pattern portion 152C is located between the second pattern portion 154C and the third pattern portion 156C in the Y direction. The second pattern portion 154C is located on the left side relative to the first pattern portion 152C. The third pattern portion 156C is located on the right side relative to the first pattern portion 152C.

The first pattern portion 152C, the second pattern portion 154C, and the third pattern portion 156C each have a substantially stripe shape. Each of the first pattern portion 152C, the second pattern portion 154C, and the third pattern portion 156C includes a plurality of linear portions LC that extend substantially parallel to the X direction.

The width of the first pattern portion 152C in the X direction is greater than the width of each of the second pattern portion 154C and the third pattern portion 156C in the X direction. The width of each pattern of the applied filler 150C in the X direction is the length of the linear portion LC of each pattern in the X direction.

As in the first example described using Fig. 6, the filler 150 is formed by compressing the applied filler 150C in the Z direction. The wide region 152 corresponds to the first pattern portion 152C. The first narrow region 154 corresponds to the second pattern portion 154C. The second narrow region 156 corresponds to the third pattern portion 156C.

Fig. 9 is a view for describing a fourth example of a method of forming the filler 150 according to the embodiment. The fourth example described using Fig. 9 is the same as the first example described using Fig. 6, except for the following point.

The applied filler 150D illustrated in Fig. 9 includes a first pattern portion 152D, a second pattern portion 154D, and a third pattern portion 156D. The first pattern portion 152D is located between the second pattern portion 154D and the third pattern portion 156D in the X direction. The second pattern portion 154D is in front of the first pattern portion 152D. The third pattern portion 156D is behind the first pattern portion 152D.

The first pattern portion 152D, the second pattern portion 154D, and the third pattern portion 156D each have a substantially stripe shape. Each of the first pattern portion 152D, the second pattern portion 154D, and the third pattern portion 156D includes a plurality of linear portions LD that extend substantially parallel to the Y direction.

The width of the first pattern portion 152D in the Y direction is greater than the width of each of the second pattern portion 154D and the third pattern portion 156D in the Y direction. The width of each pattern of the applied filler 150D in the X direction is the length of the linear portion LD of each pattern in the Y direction. As a result, the first pattern portion 152D includes a central region 152Da, a left region 152Db, and a right region 152Dc. The central region 152Da is in a region overlapping the second pattern portion 154D and the third pattern portion 156D in the X direction. The left region 152Db is located on the left side relative to the central region 152Da. The right region 152Dc is located on the right side relative to the central region 152Da.

As in the first example described using Fig. 6, the filler 150 is formed by compressing the applied filler 150D in the Z direction. The wide region 152 corresponds to the central region 152Da, the second pattern portion 154D, and the third pattern portion 156D. The first narrow region 154 corresponds to the left region 152Db. The second narrow region 156 corresponds to the right region 152Dc.

The embodiments according to the present invention have been described above with reference to the drawings, but these are exemplifications of the present invention, and various configurations other than those described above can also be adopted.

This application claims priority based on Japanese patent application No. 2023-017107 filed on February 7, 2023, the disclosure of which is incorporated herein in its entirety by reference.

### REFERENCE SIGNS LIST

10 Battery pack, 100 Battery module, 102 Battery cell, 102G Cell stack, 104 Terminal, 110 Housing case, 112 Left cover, 114 Right cover, 116 Lower cover, 116a Thermally conductive adhesive, 118 Upper cover, 122 Left protrusion, 124 Right protrusion, 150 Filler, 150A, 150B, 150C, 150D Applied filler, 152 Wide region, 152A, 152B, 152C, 152D First pattern portion, 152Ba, 152Da Central region, 152Bb, 152Db Left region, 152Bc, 152Dc Right region, 154 First narrow region, 154A, 154B, 154C, 154D Second pattern portion, 156 Second narrow region, 156A, 156B, 156C, 156D Third pattern portion, 162 Left bolt, 164 Right bolt, 200 Housing body, 210 Lower case, 212 Lower plate, 212a Upper cooling plate, 212b Lower cooling plate, 212c Refrigerant, 214 Side frame, 216 Support frame, 216a Left support portion, 216b Right support portion, 220 Upper case, 230 Sealing member, 250 Housing space, LC, LD Linear portion, TA, TB Folded portion

## Claims

1. A battery pack comprising:
a battery cell;
a thermally conductive element thermally coupled with a predetermined portion of the battery cell; and
a filler thermally coupled with another predetermined portion of the battery cell, wherein
an amount of at least a portion of the filler decreases toward the predetermined portion of the battery cell.

2. The battery pack according to claim 1, wherein
the thermally conductive element is located on at least one of opposite sides of a plurality of the battery cells stacked in a predetermined direction.

3. A method of manufacturing a battery pack, the method comprising:
a step of thermally coupling a predetermined portion of a battery cell and a thermally conductive element; and
a step of thermally coupling another predetermined portion of the battery cell and a filler, wherein
an amount of at least a portion of the filler decreases toward the predetermined portion of the battery cell.
